# EUROPEAN PATENT APPLICATION

(11) **EP 4 717 536 A1**
(43) Date of publication of application: **01.04.2026**
(21) Application number: 25205169.3
(22) Date of filing: 29.09.2025
(51) Int. Cl.: B60T 15/04, B60T 15/02, B60T 15/12

(54) **INTEGRATED RELAY VALVE AND BRAKING SYSTEM**

(30) Priority: 30.09.2024 CN 202411388572
(71) Applicant: ZF Commercial Vehicle Systems (Qingdao) Co., Ltd., Qingdao, Shandong 266510 (CN)
(72) Inventor: QIU, Guoguang, Shandong, 266510 (CN); LI, Tao, Shandong, 266510 (CN)
(74) Representative: Hafner & Kohl PartmbB

(57) **Abstract**

The present disclosure relates to the technical field of braking, and provides an integrated relay valve and a braking system. The integrated relay valve is provided with a service working chamber and a parking working chamber. A service brake assembly that divides the service working chamber into a service control chamber and a service brake chamber is disposed in the service working chamber, and a parking brake assembly that divides the parking working chamber into a parking control chamber and a parking brake chamber is disposed in the parking working chamber. The service control chamber is independent of the parking working chamber, and the service brake chamber is adjacent to the parking control chamber. The integrated relay valve is further provided with a valve chamber between the service brake chamber and the parking control chamber, the valve chamber being connected to an air outlet of the service brake chamber, a parking valve interface and the parking control chamber, respectively; and a valve spool disposed in the valve chamber, the valve chamber following the movement of the valve spool to connect the air outlet of the service brake chamber or the parking valve interface with the parking control chamber. The integrated relay valve of the present disclosure can effectively prevent dual braking while avoiding impact on accuracy and responsiveness of both a service brake and a parking brake.

## Description

### Technical Field

The present disclosure relates to the technical field of braking, and in particular to an integrated relay valve and a braking system.

### Background Art

Relay valves are used in braking systems of commercial vehicles and other heavy-duty vehicles, serving to shorten reaction time and pressure build-up time. Conventionally, two relay valves are provided in a braking system, which are used for a service brake and a parking brake, respectively. With the development of technology, an integrated relay valve that integrates two relay valves into a single unit has emerged to reduce parts of the braking system and simplify piping connections.

The integrated relay valve is provided with a service brake assembly located in a service control chamber and a service brake chamber, and a parking brake assembly located in a parking control chamber and a parking brake chamber. When the service control chamber has air pressure input, the service brake assembly operates, so that an air outlet of the service brake chamber has air pressure output, and the braking system enters a service brake state. When the parking control chamber has no air pressure input, an air outlet of the parking brake chamber has no air pressure output, and the braking system enters a parking brake state.

Consideration needs to be given to preventing dual braking in the design of the integrated relay valve. That is, in the case where the service control chamber has air pressure input and the parking control chamber has no air pressure input, it is necessary to avoid a simultaneous action of the service brake and the parking brake. Otherwise, it will cause overload damage to mechanical transmission elements of the braking system.

The existing integrated relay valve has the following defects in the design of preventing dual braking.

With respect to some integrated relay valves, the service control chamber is connected to the parking control chamber to achieve the service brake while maintaining the air pressure output at the air outlet of the parking brake chamber. Under this design, if a pipeline with an air inlet/air outlet of the service brake chamber is disconnected, and the service control chamber has a constant air pressure input, hazardous conditions may occur where the service brake fails and the parking brake is inoperative.

With respect to some integrated relay valves, a long passage is added to a side wall of a valve body to connect the service brake chamber with the parking control chamber, ensuring that when a service brake circuit functions normally, the air outlet of the parking brake chamber has air pressure output. The long passage added in this design significantly extends the service brake chamber, thereby prolonging both the pressure build-up time and the release time of the service brake, which substantially affects the responsiveness of the service brake.

It should be noted that information disclosed in the above background art section is only used to enhance the understanding of the background of the present disclosure, and therefore may include information that does not constitute the prior art known to those of ordinary skill in the art.

### Summary

In view of this, the present disclosure provides an integrated relay valve and a braking system, which can effectively prevent dual braking while avoiding impact on accuracy and responsiveness of both a service brake and a parking brake.

According to an aspect of the present disclosure, provided is an integrated relay valve, which is provided with a service working chamber and a parking working chamber, a service brake assembly that divides the service working chamber into a service control chamber and a service brake chamber being disposed in the service working chamber, and a parking brake assembly that divides the parking working chamber into a parking control chamber and a parking brake chamber being disposed in the parking working chamber; where the service control chamber is independent of the parking working chamber, the service brake chamber is adjacent to the parking control chamber, and the integrated relay valve is further provided with a valve chamber between the service brake chamber and the parking control chamber, the valve chamber being connected to an air outlet of the service brake chamber, a parking valve interface and the parking control chamber, respectively; and a valve spool disposed in the valve chamber, the valve chamber following the movement of the valve spool to connect the air outlet of the service brake chamber or the parking valve interface with the parking control chamber.

In some embodiments, when the air outlet of the service brake chamber has air pressure output and the parking valve interface has no air pressure input, the valve chamber connects the air outlet of the service brake chamber with the parking control chamber; when the air outlet of the service brake chamber has no air pressure output and the parking valve interface has no air pressure input, the valve spool is in a free state; and when the parking valve interface has air pressure input, the valve chamber connects the parking valve interface with the parking control chamber.

In some embodiments, the state in which the air outlet of the service brake chamber has no air pressure output includes: a service valve interface has air pressure input while the air outlet of the service brake chamber has no air pressure output, and the service valve interface has no air pressure input while the air outlet of the service brake chamber has no air pressure output.

In some embodiments, when the valve spool is in the free state, the valve chamber connects the parking valve interface with the parking control chamber.

In some embodiments, the state in which the parking valve interface has air pressure input includes: the service valve interface has no air pressure input while the parking valve interface has air pressure input, and the service valve interface has air pressure input while the parking valve interface has air pressure input.

In some embodiments, the service control chamber, the service brake chamber, the parking control chamber, and the parking brake chamber are sequentially distributed in a height direction of the integrated relay valve.

In some embodiments, the parking valve interface is flush with the valve chamber in the height direction of the integrated relay valve.

In some embodiments, the valve chamber is connected to the air outlet of the service brake chamber via a first passage, connected to the parking valve interface via a second passage, and connected to the parking control chamber via a third passage.

In some embodiments, the valve chamber has a first opening leading to the air outlet of the service brake chamber, a second opening leading to the parking valve interface, and a third opening leading to the parking control chamber; and annular protrusions for sealing fit with the first opening and the second opening are provided at two ends of the valve spool, respectively, and the valve spool is spaced apart from the third opening.

In some embodiments, the service brake assembly includes a first piston that divides the service working chamber into the service control chamber and the service brake chamber, and a first valve located in the service brake chamber, where the first piston is capable of pushing the first valve to connect an air inlet and the air outlet of the service brake chamber, and the first piston and the first valve are allowed to reset to connect the air outlet of the service brake chamber with an exhaust port, respectively; and the parking brake assembly includes a second piston that divides the parking working chamber into the parking control chamber and the parking brake chamber, and a second valve located in the parking brake chamber, where the second piston is capable of pushing the second valve to connect an air inlet and an air outlet of the parking brake chamber, and the second piston and the second valve are allowed to reset to connect the air outlet of the parking brake chamber with the exhaust port, respectively.

According to another aspect of the present disclosure, provided is a braking system, which includes a service brake valve, a parking brake valve, a service brake air supply, a parking brake air supply, and a brake air chamber including a service chamber and a parking chamber, and the braking system further includes: an integrated relay valve as described in any of the above embodiments, where a service valve interface of the integrated relay valve is connected to the service brake valve, the parking valve interface is connected to the parking brake valve, an air inlet and an air outlet of the service brake chamber are connected to the service brake air supply and the service chamber of the brake air chamber, respectively, and an air inlet and an air outlet of the parking brake chamber are connected to the parking brake air supply and the parking chamber of the brake air chamber, respectively.

Compared with the prior art, the present disclosure has at least the following beneficial effects.

Since the service control chamber and the parking working chamber are independent of each other, the state of air pressure of the service control chamber will not affect the operating state of the parking brake assembly, avoiding hazardous conditions where the service brake fails and the parking brake is inoperative.

Since the air outlet of the service brake chamber, the parking valve interface and the valve chamber of the parking control chamber are connected respectively, and the valve chamber follows the movement of the valve spool to connect the air outlet of the service brake chamber with the parking control chamber or connect the parking valve interface with the parking control chamber, the air outlet of the service brake chamber has air pressure output while the parking brake assembly operates under action of the air pressure of the parking control chamber, thereby preventing dual braking. The service brake chamber is adjacent to the parking control chamber, and the valve chamber is disposed between the service brake chamber and the parking control chamber, thereby shortening a path of the service brake chamber to the parking control chamber, with minimal impact on pressure build-up time and release time of the service brake.

Therefore, the integrated relay valve of the present disclosure can effectively prevent dual braking while avoiding impact on accuracy and responsiveness of both the service brake and the parking brake.

It should be understood that the above general description and the following detailed description are only exemplary and explanatory, and cannot limit the present disclosure.

### Brief Description of the Drawings

The accompanying drawings herein, which are incorporated into and constitute a part of the description, illustrate embodiments consistent with the present disclosure and, together with the description, are used to explain principles of the present disclosure. Obviously, the accompanying drawings described below show merely some of the embodiments of the present disclosure, and those of ordinary skill in the art would also have obtained other accompanying drawings according to these accompanying drawings without any creative effort.
Fig. 1 shows a schematic structural diagram of an integrated relay valve in a parking brake state according to an embodiment of the present disclosure;
Fig. 2 shows a schematic structural diagram of the integrated relay valve in a service non-brake state according to an embodiment of the present disclosure;
Fig. 3 shows a schematic structural diagram of the integrated relay valve in a service brake state according to an embodiment of the present disclosure; and
Fig. 4 shows a schematic structural diagram of the integrated relay valve in a state of preventing dual braking according to an embodiment of the present disclosure.

### Detailed Description of Embodiments

Now exemplary implementations will be described more fully with reference to the accompanying drawings. However, the exemplary implementations can be implemented in many forms and should not be construed as being limited to the implementations described herein. On the contrary, these implementations are provided to make the present disclosure more thorough and complete, and to fully convey the concept of the exemplary implementations to those skilled in the art.

The accompanying drawings are only schematic illustrations of the present disclosure, and are not necessarily drawn to scale. In the accompanying drawings, the same reference numerals denote the same or similar parts, and thus the repeated description thereof will be omitted.

The terms "first", "second" and similar terms used in the specific description do not denote any order, quantity, or importance, but are merely used to distinguish between different components. Orientations or positional relationships indicated by the terms such as "upper", "lower", "left" and "right" are based on orientations or positional relationships shown in the drawings, which is only for convenience of describing the present disclosure and simplifying the description, rather than indicating or implying that an apparatus or an element referred to must have a specific orientation or be constructed and operated in a specific orientation, and therefore cannot be construed as limiting the present disclosure. Moreover, throughout this specification, when it is said that a device is "connected" to another device, this includes not only the case of direct connection but also the case of indirect connection through other elements.

It should be noted that the embodiments in the present disclosure and features of the various embodiments can be combined with each other without conflict.

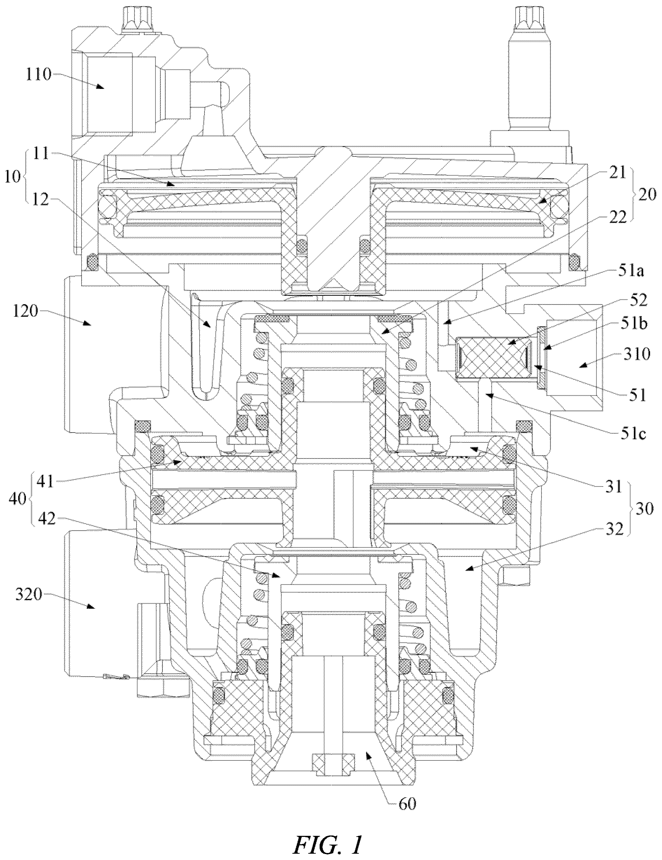

Fig. 1 illustrates the structure of an integrated relay valve according to an embodiment of the present disclosure. Referring to Fig. 1, the integrated relay valve provided in the embodiment of the present disclosure is provided with
a service working chamber 10 and a parking working chamber 30, a service brake assembly 20 that divides the service working chamber 10 into a service control chamber 11 and a service brake chamber 12 being disposed in the service working chamber, and a parking brake assembly 40 that divides the parking working chamber 30 into a parking control chamber 31 and a parking brake chamber 32 being disposed in the parking working chamber;
where the service control chamber 11 is independent of the parking working chamber 30, the service brake chamber 12 is adjacent to the parking control chamber 31, and the integrated relay valve is further provided with
a valve chamber 51 between the service brake chamber 12 and the parking control chamber 31, the valve chamber 51 being connected to an air outlet of the service brake chamber 12, a parking valve interface 310 and the parking control chamber 31, respectively; and
a valve spool 52 disposed in the valve chamber 51, the valve chamber 51 following the movement of the valve spool 52 to connect the air outlet of the service brake chamber 12 or the parking valve interface 310 with the parking control chamber 31.

Since the service control chamber 11 and the parking working chamber 30 are independent of each other, the state of air pressure of the service control chamber 11 will not affect the operating state of the parking brake assembly 40, avoiding hazardous conditions where a service brake fails and a parking brake is inoperative.

Since the air outlet of the service brake chamber 12, the parking valve interface 310 and the valve chamber 51 of the parking control chamber 31 are connected respectively, and the valve chamber 51 follows the movement of the valve spool 52 to connect the air outlet of the service brake chamber 12 with the parking control chamber 31 or connect the parking valve interface 310 with the parking control chamber 31, the air outlet of the service brake chamber 12 has air pressure output while the parking brake assembly 40 operates under action of the air pressure of the parking control chamber 31, thereby preventing dual braking. The service brake chamber 12 is adjacent to the parking control chamber 31, and the valve chamber 51 is disposed between the service brake chamber 12 and the parking control chamber 31, thereby shortening a path of the service brake chamber 12 to the parking control chamber 31, with minimal impact on pressure build-up time and release time of the service brake.

Therefore, the integrated relay valve of the present disclosure can effectively prevent dual braking while avoiding impact on accuracy and responsiveness of both the service brake and the parking brake.

In the integrated relay valve, the service brake assembly 20 includes a first piston 21 that divides the service working chamber 10 into the service control chamber 11 and the service brake chamber 12, and a first valve 22 located in the service brake chamber 12, where the first piston 21 is capable of pushing the first valve 22 to connect an air inlet 120 and the air outlet (not shown specifically in the figure) of the service brake chamber 12, and the first piston 21 and the first valve 22 are allowed to reset (the first piston 21 and the first valve 22 are provided with a reset spring respectively) to connect the air outlet of the service brake chamber 12 with an exhaust port 60, respectively. The parking brake assembly 40 includes a second piston 41 that divides the parking working chamber 30 into the parking control chamber 31 and the parking brake chamber 32, and a second valve 42 located in the parking brake chamber 32, where the second piston 41 is capable of pushing the second valve 42 to connect an air inlet (not shown specifically in the figure) and an air outlet 320 of the parking brake chamber 32, and the second piston 41 and the second valve 42 are allowed to reset (the second piston 41 and the second valve 42 are provided with a reset spring respectively) to connect the air outlet of the parking brake chamber 32 with the exhaust port 60, respectively.

The connection relationship between the integrated relay valve and various components of the braking system includes: a service valve interface 110 of the service control chamber 11 is connected to a service brake valve of the braking system, the parking valve interface 310 of the parking control chamber 31 is connected to a parking brake valve of the braking system, the air inlet 120 and the air outlet of the service brake chamber 12 are connected to a service brake air supply and a service chamber of a brake air chamber of the braking system respectively, and the air inlet and the air outlet 320 of the parking brake chamber 32 are connected to a parking brake air supply and a parking chamber of the brake air chamber of the braking system respectively.

The integrated relay valve shown in Fig. 1 is in a parking brake state. In the parking brake state, the parking valve interface 310 has no air pressure input, the parking brake assembly 40 does not work, the air outlet of the parking brake chamber 32 has no air pressure output, and accordingly air supply to the parking chamber of the brake air chamber is cut off, and the integrated relay valve enters the parking brake state. In this case, a service brake circuit is in an inoperative state: the service valve interface 110 has no air pressure input, the service brake assembly 20 does not work, the air outlet of the service brake chamber 12 has no air pressure output, and the service chamber of the brake air chamber does not work.

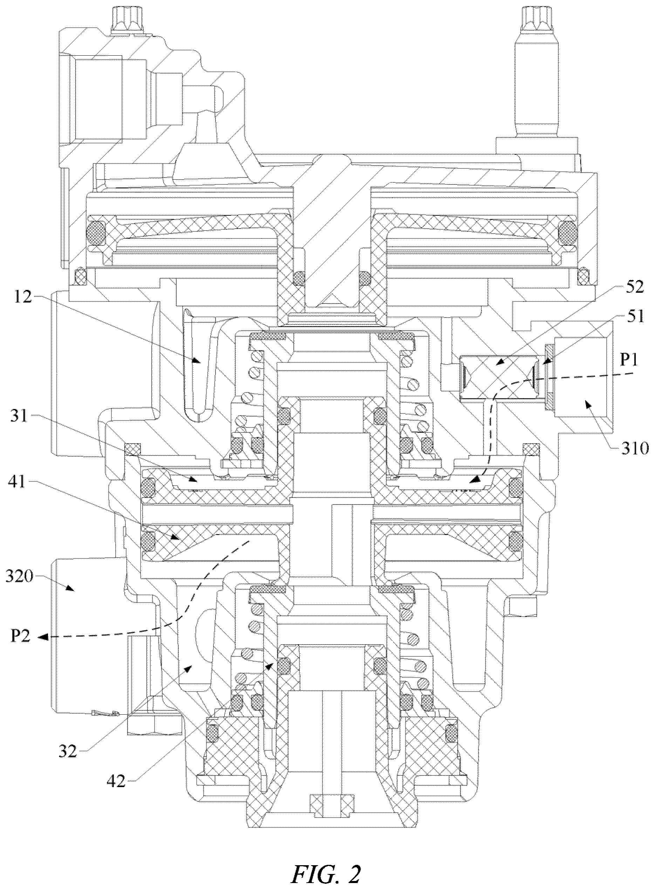

Fig. 2 shows the structure of the integrated relay valve in a service non-brake state. Referring to Fig. 2, the service brake circuit is in an inoperative state in the service non-brake state. In this case, an operating state of a parking brake circuit is: control air pressure from the parking brake valve is input by the parking valve interface 310, to push the valve spool 52 to move to the valve chamber 51 so as to connect the parking valve interface 310 with the parking control chamber 31 (a path of movement of the control air pressure may be indicated by arrow P1); then, the control air pressure in the parking control chamber 31 pushes the second piston 41 to move, and the second piston 41 pushes the second valve 42 to achieve communication between the air inlet of the parking brake chamber 32 and the air outlet 320; thus, brake air pressure from the parking brake air supply is output to the parking chamber of the brake air chamber via the air inlet and the air outlet 320 of the parking brake chamber 32 (a path of movement of the brake air pressure may be indicated by arrow P2). The parking brake is released in the case that the parking chamber of the brake air chamber has air pressure input.

Here, the valve chamber 51 has a first opening leading to the air outlet of the service brake chamber 12, a second opening leading to the parking valve interface 310, and a third opening leading to the parking control chamber 31; and annular protrusions for sealing fit with the first opening and the second opening of the valve chamber 51 are provided at two ends of the valve spool 52, respectively, and the valve spool 52 is spaced apart from the third opening. When the control air pressure is input by the parking valve interface 310, the control air pressure pushes the valve spool 52 to the left, causing the valve spool 52 to exit the second opening and seal the first opening, so that the second opening of the valve chamber 51 is connected to the third opening to achieve communication between the parking valve interface 310 and the parking control chamber 31.

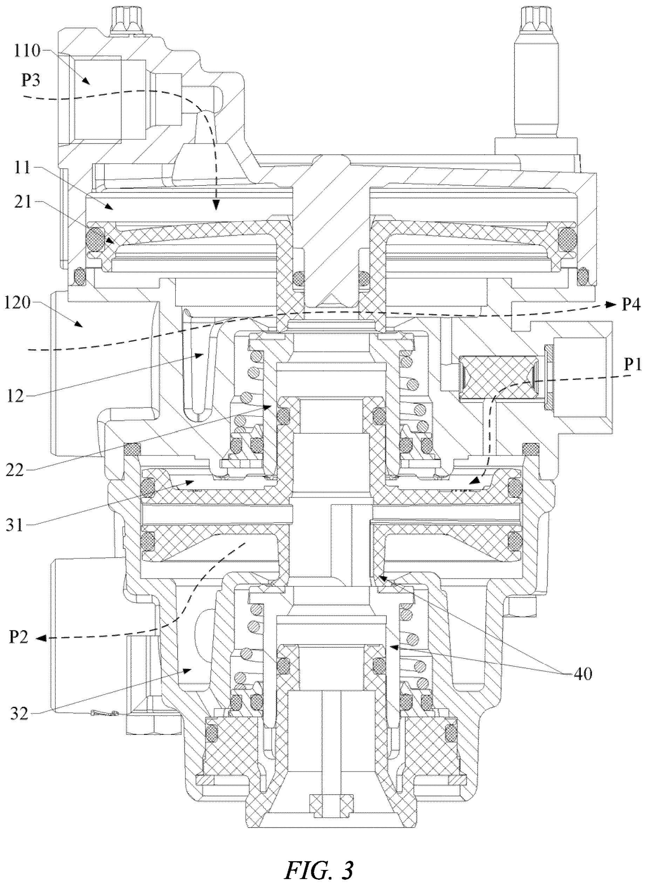

Fig. 3 shows the structure of the integrated relay valve in a service brake state. Referring to Fig. 3, in the service brake state, the parking brake circuit maintains the operating state in which the parking brake is released, that is, the control air pressure from the parking brake valve enters the parking control chamber 31 along the path indicated by the arrow P1, to drive the parking brake assembly 40 to operate, so that the brake air pressure from the parking brake air supply is output to the parking chamber of the brake air chamber via the parking brake chamber 32 along the path indicated by the arrow P2, thereby releasing the parking brake. In this case, an operating state of the service brake circuit is: control air pressure from the service brake valve is input into the service control chamber 11 via the service valve interface 110 (a path of movement of the control air pressure may be indicated by arrow P3) to push the first piston 21 to move, the first piston 21 then pushes the first valve 22, so that the air inlet 120 of the service brake chamber 12 is connected to the air outlet, and brake air pressure from the service brake air supply is output to the service chamber of the brake air chamber via the air inlet 120 and the air outlet of the service brake chamber 12 (a path of movement of the brake air pressure may be indicated by arrow P4), achieving the service brake.

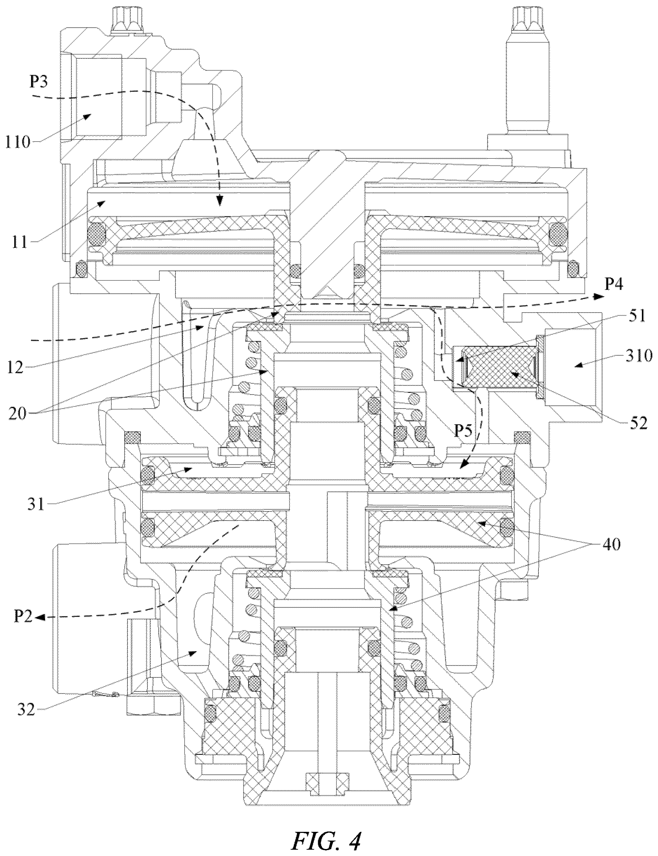

Fig. 4 shows the structure of the integrated relay valve in a state of preventing dual braking. Referring to Fig. 4, when the service valve interface 110 has air pressure input while the parking valve interface 310 has no air pressure input, this corresponds to an actual operating condition where a driver simultaneously presses a foot brake and pulls a hand brake, causing the service brake valve to output air pressure while the parking brake valve stops air pressure output. In this case, the service brake circuit operates normally, that is, the control air pressure from the service brake valve is input into the service control chamber 11 along the path indicated by the arrow P3 to drive the service brake assembly 20 to operate, so that the brake air pressure from the service brake air supply is output to the service chamber of the brake air chamber along the path indicated by the arrow P4, achieving the service brake. Further, the air pressure at the air outlet of the service brake chamber 12 further pushes the valve spool 52 along a path indicated by arrow P5 to the valve chamber 51 to connect the air outlet of the service brake chamber 12 with the parking control chamber 31, causing the air pressure in the parking control chamber 31 to drive the parking brake assembly 40 to operate, so that the brake air pressure from the parking brake air supply is output to the parking chamber of the brake air chamber via the parking brake chamber 32 along the path indicated by the arrow P2, which releases the parking brake to a certain extent, thus preventing dual braking.

Here, when the air pressure from the air outlet of the service brake chamber 12 acts on the valve spool 52, the valve spool 52 is pushed to the right, so that the valve spool 52 exits the first opening of the valve chamber 51 and seals the second opening, the first opening of the valve chamber 51 is connected to the third opening, and the valve chamber 51 connects the air outlet of the service brake chamber 12 with the parking control chamber 31.

As shown in Figs. 1 and 4, in the integrated relay valve of the present disclosure, the service control chamber 11 is independent of the parking working chamber 30, and a parking control circuit utilizes the air pressure output from the air outlet of the service brake chamber 12 to release the parking brake. Once the air outlet of the service brake chamber 12 has no air pressure output, the air pressure acting on the valve spool 52 is eliminated. In this case, if the parking valve interface 310 has no air pressure input, then the integrated relay valve enters the parking brake state. This prevents hazardous conditions where the service brake fails and the parking brake is inoperative.

As shown in Figs. 1 to 4, in the integrated relay valve of the present disclosure, the service brake chamber 12 is adjacent to the parking control chamber 31, the valve chamber 51 is disposed between the service brake chamber 12 and the parking control chamber 31, and both the path connecting the parking valve interface 310 to the parking control chamber 31 via the valve chamber 51 and the path connecting the air outlet of the service brake chamber 12 to the parking control chamber 31 via the valve chamber 51 are short, which enables rapid response for establishing and releasing the parking brake while having little impact on the pressure build-up time and the release time of the service brake. Therefore, the integrated relay valve of the present disclosure prevents dual braking while avoiding impact on accuracy and responsiveness of both the service brake and the parking brake.

In some embodiments, when the air outlet of the service brake chamber 12 has air pressure output and the parking valve interface 310 has no air pressure input, the valve chamber 51 connects the air outlet of the service brake chamber 12 with the parking control chamber 31, and the integrated relay valve enters the state of preventing dual braking as shown in Fig. 4.

In some embodiments, when the air outlet of the service brake chamber 12 has no air pressure output and the parking valve interface 310 has no air pressure input, the valve spool 52 is in a free state, and the integrated relay valve enters the parking brake state as shown in Fig. 1. Here, the state in which the air outlet of the service brake chamber 12 has no air pressure output includes: the service valve interface 110 has air pressure input while the air outlet of the service brake chamber 12 has no air pressure output (at this point, the service brake fails), and the service valve interface 110 has no air pressure input while the air outlet of the service brake chamber 12 has no air pressure output. Here, when the valve spool 52 is in the free state, the valve chamber 51 connects the parking valve interface 310 with the parking control chamber 31, so that the parking brake can be released quickly subsequently, the valve chamber 51 is in a state of connecting the parking valve interface 310 with the parking control chamber 31 when both the air outlet of the service brake chamber 12 and the parking valve interface 310 output air pressure to the valve chamber 51, and moreover, the service brake is established first, followed by releasing the parking brake correspondingly in the case of dual braking.

In some embodiments, when the parking valve interface 310 has air pressure input, the valve chamber 51 connects the parking valve interface 310 with the parking control chamber 31. Here, the state in which the parking valve interface 310 has air pressure input includes: the service valve interface 110 has no air pressure input and the parking valve interface 310 has air pressure input (at this point, the integrated relay valve enters the service non-brake state shown in Fig. 2), and both the service valve interface 110 and the parking valve interface 310 have air pressure input (at this point, the integrated relay valve enters the service brake state shown in Fig. 3).

In some embodiments, the service control chamber 11, the service brake chamber 12, the parking control chamber 31, and the parking brake chamber 32 are sequentially distributed in a height direction of the integrated relay valve. In this way, the service brake assembly 20 and the parking brake assembly 40 are arranged at two ends of the integrated relay valve respectively, and the service brake chamber 12 is adjacent to the parking control chamber 31.

In some embodiments, the parking valve interface 310 is flush with the valve chamber 51 in the height direction of the integrated relay valve. In this way, the arrangement of the valve chamber 51 substantially does not affect an intrinsic path of the parking valve interface 310 to the parking control chamber 31, and the valve chamber 51 is located between the service brake chamber 12 and the parking control chamber 31 which are adjacent to each other, thereby avoiding impact on accuracy and responsiveness of both the service brake and the parking brake.

In some embodiments, the valve chamber 51 is connected to the air outlet of the service brake chamber 12 via a first passage 51a, connected to the parking valve interface 310 via a second passage 51b, and connected to the parking control chamber 31 via a third passage 51c.

An embodiment of the present disclosure further provides a braking system. With reference to Figs. 1 to 4, the braking system is provided with the integrated relay valve as described in any of the above embodiments. Here, the service valve interface 110 of the integrated relay valve is connected to a service brake valve of the braking system, the parking valve interface 310 of the integrated relay valve is connected to a parking brake valve of the braking system, the air inlet 120 and the air outlet of the service brake chamber 12 of the integrated relay valve are connected to a service brake air supply and a service chamber of a brake air chamber of the braking system respectively, and the air inlet and the air outlet 320 of the parking brake chamber 32 of the integrated relay valve are connected to a parking brake air supply and a parking chamber of the brake air chamber of the braking system, respectively.

According to the braking system of the present disclosure, with the integrated relay valve, the number of system parts can be reduced while piping connection is simplified. Besides, the service brake circuit and the parking brake circuit of the integrated relay valve are designed independently, effectively preventing dual braking, and also avoiding impact on accuracy and responsiveness of both the service brake and the parking brake, thus ensuring brake safety, and improving reliability of the braking system.

The above is a further detailed description of the present disclosure with reference to the specific preferred implementations, and it cannot be considered that the specific implementation of the present disclosure is limited to these descriptions. For those of ordinary skill in the art of the present disclosure, several simple deductions or substitutions can be further made without departing from the concept of the present disclosure, and should be regarded as falling within the scope of protection of the present disclosure.

## Claims

1. An integrated relay valve, provided with a service working chamber and a parking working chamber, a service brake assembly that divides the service working chamber into a service control chamber and a service brake chamber being disposed in the service working chamber, and a parking brake assembly that divides the parking working chamber into a parking control chamber and a parking brake chamber being disposed in the parking working chamber;
**characterized in that** the service control chamber is independent of the parking working chamber, the service brake chamber is adjacent to the parking control chamber, and the integrated relay valve is further provided with
a valve chamber between the service brake chamber and the parking control chamber, the valve chamber being connected to an air outlet of the service brake chamber, a parking valve interface and the parking control chamber, respectively; and
a valve spool disposed in the valve chamber, the valve chamber following the movement of the valve spool to connect the air outlet of the service brake chamber or the parking valve interface with the parking control chamber.

2. The integrated relay valve according to claim 1, **characterized in that** when the air outlet of the service brake chamber has air pressure output and the parking valve interface has no air pressure input, the valve chamber connects the air outlet of the service brake chamber with the parking control chamber;
when the air outlet of the service brake chamber has no air pressure output and the parking valve interface has no air pressure input, the valve spool is in a free state; and
when the parking valve interface has air pressure input, the valve chamber connects the parking valve interface with the parking control chamber.

3. The integrated relay valve according to claim 2, **characterized in that** the state in which the air outlet of the service brake chamber has no air pressure output comprises:
a service valve interface has air pressure input while the air outlet of the service brake chamber has no air pressure output, and the service valve interface has no air pressure input while the air outlet of the service brake chamber has no air pressure output.

4. The integrated relay valve according to claim 2, **characterized in that** when the valve spool is in the free state, the valve chamber connects the parking valve interface with the parking control chamber.

5. The integrated relay valve according to claim 2, **characterized in that** the state in which the parking valve interface has air pressure input comprises:
the service valve interface has no air pressure input while the parking valve interface has air pressure input, and the service valve interface has air pressure input while the parking valve interface has air pressure input.

6. The integrated relay valve according to claim 1, **characterized in that** the service control chamber, the service brake chamber, the parking control chamber, and the parking brake chamber are sequentially distributed in a height direction of the integrated relay valve.

7. The integrated relay valve according to claim 6, **characterized in that** the parking valve interface is flush with the valve chamber in the height direction of the integrated relay valve.

8. The integrated relay valve according to claim 1, 6 or 7, **characterized in that** the valve chamber is connected to the air outlet of the service brake chamber via a first passage, connected to the parking valve interface via a second passage, and connected to the parking control chamber via a third passage.

9. The integrated relay valve according to claim 1, **characterized in that** the valve chamber has a first opening leading to the air outlet of the service brake chamber, a second opening leading to the parking valve interface, and a third opening leading to the parking control chamber; and
annular protrusions for sealing fit with the first opening and the second opening are provided at two ends of the valve spool, respectively, and the valve spool is spaced apart from the third opening.

10. The integrated relay valve according to claim 1, **characterized in that** the service brake assembly comprises a first piston that divides the service working chamber into the service control chamber and the service brake chamber, and a first valve located in the service brake chamber, wherein the first piston is capable of pushing the first valve to connect an air inlet and the air outlet of the service brake chamber, and the first piston and the first valve are allowed to reset to connect the air outlet of the service brake chamber with an exhaust port, respectively; and
the parking brake assembly comprises a second piston that divides the parking working chamber into the parking control chamber and the parking brake chamber, and a second valve located in the parking brake chamber, wherein the second piston is capable of pushing the second valve to connect an air inlet and an air outlet of the parking brake chamber, and the second piston and the second valve are allowed to reset to connect the air outlet of the parking brake chamber with the exhaust port, respectively.

11. A braking system, comprising a service brake valve, a parking brake valve, a service brake air supply, a parking brake air supply, and a brake air chamber comprising a service chamber and a parking chamber, **characterized in that** the braking system further comprises:
the integrated relay valve according to any one of claims 1-10, wherein a service valve interface of the integrated relay valve is connected to the service brake valve, the parking valve interface is connected to the parking brake valve, an air inlet and an air outlet of the service brake chamber are connected to the service brake air supply and the service chamber of the brake air chamber, respectively, and an air inlet and an air outlet of the parking brake chamber are connected to the parking brake air supply and the parking chamber of the brake air chamber, respectively.
